# EUROPÄISCHE PATENTSCHRIFT

(11) **EP 0 799 863 B1**
(45) Veröffentlichungstag und Bekanntmachung des Hinweises auf die Patenterteilung: **26.09.2001**
(21) Anmeldenummer: 97104943.2
(22) Anmeldetag: 24.03.1997
(51) Int. Cl.: C09B 67/52, C09B 48/00, C09B 67/10, C09B 67/22

(54) **Verfahren zur Herstellung von linearen, unsubstituierten Chinacridonpigmenten der beta-Phase**
Process for the manufacture of linear non-substituted quinacridone pigments in the beta phase
Procédé de fabrication de pigments de quinacridone linéaire non substituée de la phase béta

(30) Priorität: 02.04.1996 DE 19613190
(43) Veröffentlichungstag der Anmeldung: 08.10.1997
(73) Patentinhaber: Clariant GmbH, 65929 Frankfurt am Main (DE)
(72) Erfinder: Urban, Manfred, 65205 Wiesbaden (DE); Schnaitmann, Dieter, Dr., 65817 Eppstein (DE)

(56) Entgegenhaltungen:
- EP-A- 0 517 663
- EP-A- 0 655 485
- EP-A- 0 666 288

## Beschreibung

Die vorliegende Erfindung liegt auf dem technischen Gebiet der Chinacridonpigmente und betrifft ein umweltfreundliches Verfahren zur Herstellung von linearen, unsubstituierten Chinacridonpigmenten der ß-Phase in hoher Reinheit und mit hervorragenden Echtheiten.

Chinacridonpigmente sind hochechte Pigmente für höchste Ansprüche. In der Praxis werden hohe Anforderungen an ihre Echtheiten und coloristischen Eigenschaften gestellt. Deshalb kommt dem Herstellungs- und Feinverteilungsprozeß große Bedeutung zu.

Verfahren zur Herstellung von linearen, unsubstituierten Chinacridonpigmenten der β-Phase sind bereits seit langem bekannt. In technischem Maßstab erfolgt ihre Herstellung durch Oxidation von Dihydrochinacridonen in alkalischem Medium in Gegenwart von Lösemitteln und anschließender Trocken- oder Naßmahlung der erhaltenen grobkristallinen Rohpigmente oder durch Ringschluß von 2,5-Dianilinoterephthalsäure in Polyphosphorsäure oder Polyphosphorsäureester und anschließende Phasenumwandlung und Finish der erhaltenen feinteiligen Rohpigmente mit organischen Lösemitteln.

Nach der US-PS 2 844 485 erfolgt die Herstellung durch Trockenmahlung der durch Oxidation von Dihydrochinacridonen in alkalischem Medium in Gegenwart von Lösemitteln hergestellten grobkristallinen Rohpigmente der α-Phase mit Salz und einem flüssigen Kohlenwasserstoff. Wegen der hohen Salzbelastung der dabei anfallenden Abwässer ist dieses Verfahren ökologisch bedenklich und sehr teuer. Das Verfahren der US-PS 2 844 485 setzt eine Trocknung des Rohpigments voraus, ohne die die Umwandlung in die β-Phase nicht möglich ist.

Die DE-A-1 150 046 beschreibt ein Verfahren zur Herstellung von unsubstituierten Chinacridonpigmenten der β-Phase durch Erhitzen von 2,5-Dianilinoterephthalsäure in Polyphosphorsäure oder Polyphosphorsäureester und anschließende Behandlung der dabei erhaltenen feinteiligen, feuchten Rohpigmente der α-Phase in Gegenwart von mindestens der achtfachen Menge einer mindestens 5 %igen Alkalilösung, bezogen auf das Rohpigment, wobei die Umwandlung in die ß-Phase erfolgt. Die feinteiligen Chinacridonrohpigmente der β-Phase werden anschließend durch einen Lösemittelfinish in die Pigmentform überführt. Die dabei anfallenden großen Mengen Alkali belasten das Abwasser und machen das Verfahren unwirtschaftlich.

Die EP-A-0 655 485 beschreibt ein Verfahren zur Herstellung von linearen, unsubstituierten Chinacridonpigmenten der β-Phase durch Erhitzen von 2,5-Dianilinoterephthalsäure in Polyphosphorsäure oder Polyphosphorsäureester und anschließende Behandlung der bei der Hydrolyse auf Eiswasser erhaltenen feinteiligen, feuchten Rohpigmente der α-Phase mit geringen Mengen Alkali und Lösemittel, wobei die Überführung in die β-Phase und in die Pigmentform erfolgt. Vorteilhafterweise werden die feinteiligen Rohpigmente der α-Phase vor der Phasenumwandlung einer Dispergierung unterworfen. Die nach dieser ökologisch einwandfreien Arbeitsweise erhaltenen Pigmente genügen hinsichtlich ihrer Echtheiten und coloristischen Eigenschaften nicht mehr ganz den heutigen Anforderungen.

Die EP-A-0 666 288 beschreibt ein Feinverteilungsverfahren von Chinacridonpigmenten der β-Phase durch wäßrige Perlmahlung von grobkristallinen Chinacridonrohpigmenten, die gemäß der US-PS 2 969 366 durch Oxidation von Dihydrochinacridonen mit Nitrobenzolsulfonsäuresalzen in alkalischem Medium in Gegenwart von Lösemitteln hergestellt werden. Wegen der Abwasserbelastung bei der Herstellung der Chinacridonrohpigmente ist dieses Verfahren aus heutiger Sicht unwirtschaftlich und ökologisch bedenklich.

Der vorliegenden Erfindung lag die Aufgabe zugrunde, ein umweltfreundliches und kostengünstiges Verfahren zur Herstellung von Chinacridonpigmenten der β-Phase in hoher Reinheit und mit hervorragenden Echtheiten zur Verfügung zu stellen, das die Nachteile des Standes der Technik überwindet.

Es wurde gefunden, daß man Chinacridonpigmente der β-Phase in hoher Reinheit und mit hervorragenden Echtheiten erhält, wenn man den Ringschluß von 2,5-Dianilinoterephthalsäure in Polyphosphorsäure oder Polyphosphorsäureester, deren Phosphorpentoxidgehalt bei mindestens 84 % liegt, durchführt und das dabei in hoher Reinheit erhaltene, überwiegend in der α-Phase vorliegende Rohpigment zur Phasenumwandlung bei 120 bis 200 °C in einer 0,1 bis 3 gew.-%igen Lösung einer anorganischen Base in Wasser und alkalibeständigen Lösemitteln behandelt und nach der Abtrennung des Lösemittels, das grobkristalline Rohpigment der β-Phase durch Trocken- oder Naßmahlung in die Pigmentform überführt. Vor oder nach der Phasenumwandlung kann eine Behandlung mit Peroxodisulfaten durchgeführt werden. Vorteilhafterweise wird die Naßmahlung in Gegenwart von Pigmentdispergatoren durchgeführt. An die Trocken- und Naßmahlung kann sich eine Finishbehandlung mit Lösemitteln und/oder eine Behandlung mit Peroxodisulfaten anschließen.

Gegenstand der vorliegenden Erfindung ist ein Verfahren zur Herstellung von linearen, unsubstituierten Chinacridonpigmenten oder -pigmentzubereitungen der β-Phase, dadurch gekennzeichnet, daß man
a) 2,5-Dianilinoterephthalsäure in Polyphosphorsäure oder Polyphosphorsäureester, deren Phosphorpentoxidgehalt bei mindestens 84 Gew.-% liegt, zum Chinacridon cyclisiert,
b) anschließend mit Wasser oder einer wäßrigen Mineralsäurelösung, vorzugsweise Orthophosphorsäurelösung, bei einer Temperatur von mindestens 40 °C, vorzugsweise von 60 bis 105 °C, zum Chinacridonrohpigment, das überwiegend in der α-Phase vorliegt, hydrolysiert,
c) dann das Chinacridonrohpigment der α-Phase, zur Phasenumwandlung in grobkristallines Rohpigment der β-Phase, in Gegenwart einer 0,1 bis 3 gew.-%igen, vorzugsweise 0,2 bis 2 gew.-%igen, anorganischen Base in Wasser und alkalibeständigen organischen Lösemitteln auf eine Temperatur zwischen 120 und 200 °C erhitzt und
d) das grobkristalline Chinacridonrohpigment der β-Phase zur Feinverteilung in ein Pigment oder Präpigment einer Trocken- oder Naßmahlung unterwirft; und anschließend das erhaltene feinteilige Pigment der β-Phase isoliert;
e) oder das in d) erhaltene feinteilige Präpigment der β-Phase einer Finishbehandlung in Gegenwart von Lösemitteln unterwirft und anschließend das Pigment isoliert.

a und b) Bei dem erfindungsgemäßen Verfahren wird die Cyclisierung der 2,5-Dianilinoterephthalsäure in Polyphosphorsäure oder Polyphosphorsäureester, z. B. Polyphosphorsäuremethylester, deren Phosphorpentoxidgehalt bei mindestens 84 Gew.-%, vorzugsweise bei 84,1 bis 85 Gew.-%, liegt, entsprechend einem Phosphorsäureäquivalent von über 115 %, durchgeführt. Die Herstellung der erfindungsgemäß eingesetzten Polyphosphorsäure(ester) mit einem Phosphorpentoxidgehalt von mindestens 84 Gew.-% kann erfolgen, indem man käufliche Polyphosphorsäure(ester) mit einer solchen Menge Phosphorpentoxid versetzt, daß die Reaktionsmischung unter den nachfolgenden Reaktionsbedingungen noch rührfähig ist.

Die Hydrolyse erfolgt auf Wasser oder verdünnter (bis zu 30 gew.-%iger wäßriger) Orthophosphorsäure. Dabei werden die Chinacridonrohpigmente der α-Phase in hoher Reinheit erhalten.

c) Zur Phasenumwandlung in die β-Phase wird die Suspension der Chinacridonrohpigmente der α-Phase in einem inerten flüssigen Medium in Gegenwart von alkalibeständigen Lösemitteln und anorganischen Basen bei einer Temperatur im Bereich zwischen 120 und 200 °C, vorzugsweise 130 bis 160°C, unter erhöhtem Druck, 1 bis 12 Stunden behandelt. Die zugefügte Lösemittelmenge kann innerhalb weiter Grenzen schwanken. Bevorzugt verwendet man die 0,5- bis 10fache Gewichtsmenge des alkalibeständigen organischen Lösemittels, bezogen auf das Gewicht des Rohpigments der α-Phase, so daß in Bezug auf die flüssige Phase eine mindestens 5 gew.-%ige Lösung des besagten Lösemittels in Wasser vorliegt, damit eine vollständige Umwandlung in die β-Phase erfolgt. Außerdem werden, bezogen auf das feinteilige Rohpigment der α-Phase, die 0,01-0,5fache Gewichtsmenge einer anorganischen Base (100 %) zugegeben, so daß als wäßrige Phase eine 0,1 bis 3 gew.-%ige wäßrige Lösung der anorganischen Base vorliegt. Nach beendeter Phasenumwandlung werden die verwendeten Lösemittel zweckmäßigerweise zurückgewonnen und erneut eingesetzt.

Als anorganische Basen für die Phasenumwandlung kommen Natronlauge, Kalilauge, Soda, Kaliumcarbonat und Ammoniak in Betracht. Auch Mischungen der genannten Basen können verwendet werden.

Als Lösemittel für die Phasenumwandlung kommen alkalibeständige Lösemittel in Frage wie beispielsweise: C₁-C₈-Alkanole und alicyclische Alkohole, wie Methanol, Ethanol, n-Propanol oder Isopropanol, n-Butanol, Isobutanol oder tert.-Butanol, Pentanole, Hexanole, Cyclohexanol; Glykolether wie Monomethyl- oder Monoethylether des Ethylen- oder Propylenglykols, Butylglykol, Ethyldiglykol oder Methoxybutanol. Bevorzugte organische Lösemittel sind C₁-C₆-Alkanole, insbesondere Ethanol, Propanole, Butanole und Pentanole, besonders bevorzugt sind Butanole.

d) Die Trockenmahlung erfolgt in einer diskontinuierlichen oder kontinuierlichen Schwing- oder Rollmühle unter milden Mahlbedingungen und bei niedrigem Mahlgutfüllgrad. Der Mahlgutfüllgrad wird definiert als das Verhältnis der Mahlgutmenge zum freien Volumen der Mahlkörperschüttung. Der Mahlgutfüllgrad liegt normalerweise bei unter 250 g Mahlgut pro Liter freiem Volumen der Mahlkörperschüttung, vorzugsweise bei 50 bis 150 g/l. Selbstverständlich kann er auch höher liegen. Bei höherem Füllgrad können technische Probleme auftreten und in vielen Fällen wird das coloristische Ziel nicht erreicht.
Die Mahlung in der Schwingmühle erfolgt in der Weise, daß die Mahlkörper im wesentlichen nur rotierende Bewegungen ausführen und ihre kinetische Energie durch die Auswahl von Masse und Größe sowie durch Drehzahl (Frequenz) und
Amplitude möglichst klein gehalten wird. Außerdem wird die Mühle mit einem hohen Anteil an Mahlkörpern sowie einem niedrigen Mahlgutfüllgrad betrieben. Der Mahlkörperfüllgrad ist definiert als das Verhältnis des Volumens der Mahlkörperschüttung zum Mühlenvolumen. Er liegt bei über 60 Vol.-%.
Die Rollmahlung wird vorzugsweise bei einem Mahlkörperfüllgrad von 40 bis 60 Vol.-% und mit 70 % der kritischen Drehzahl durchgeführt. Durch die Auswahl von Masse und Größe der Mahlkörper wird die kinetische Energie möglichst klein gehalten. Außerdem wird die Mühle mit niedrigem Mahlgutfüllgrad betrieben.
Als Mahlkörper dienen Kugeln oder Zylinder aus Stahl, Korund, Porzellan, Steatit, Aluminiumoxid, Mischoxiden und Quarz mit einem Durchmesser von 3 bis 20 mm.
Die Mahltemperatur liegt im allgemeinen unter 100 °C.
Das Mahlgut kann neben den vorstehend erwähnten Komponenten noch weitere übliche Zusatzstoffe, beispielsweise geringe Mengen Wasser, Pigmentdispergatoren auf Basis von Pigmenten, Harze, Salze von Harzen und Extender enthalten. Die Zusatzstoffe können auch in emulgierter, suspendierter und flüssiger Form eingesetzt werden, da pulverförmige Stoffe geringe Mengen (bis ca. 5 %) an Flüssigkeit aufnehmen können, ohne sofort ihre Eigenschaft als pulverförmige Substanz merklich einzubüßen. Zur Herabsetzung der Gefahr einer Staubexplosion können geringe Mengen anorganischer Salze zugesetzt werden. Besonders vorteilhaft ist es, Zusatzstoffe zu verwenden, die nach der Mahlung im Pigment verbleiben können. Die Salze der Fettsäuren und Harze können nach der Mahlung in die freien Säuren bzw. Harze überführt werden. Die Mahldauer ist abhängig von den Feinheitsanforderungen. Die Verweilzeit des Mahlguts in der Schwingmühle liegt je nach geforderter Feinheit im allgemeinen zwischen 1 und 25 Stunden. Zweckmäßig erweist sich eine Dauer von 1 bis 15 Stunden, vorzugsweise 2 bis 8 Stunden.

Die Verweilzeit des Mahlguts in der Rollmühle liegt je nach geforderter Feinheit im allgemeinen zwischen 5 und 100 Stunden. Zweckmäßig erweist sich eine Dauer von 10 bis 30 Stunden, vorzugsweise 15 bis 25 Stunden.
Die Zugabe der Zusatzstoffe kann auf einmal oder in mehreren Portionen erfolgen.

Zur Naßmahlung wird die Suspension direkt, oder nach ihrer Zwischenisolierung in Form eines feuchten Preßkuchens oder als getrocknetes grobkristallines Rohpigment der β-Phase, mit Wasser bis zu einer mahlfähigen Konsistenz verdünnt.
Für die Naßmahlung eignen sich alle diskontinuierlichen und kontinuierlichen Rührwerkskugel-, Roll- und Schwingmühlen. Hierbei ist eine hohe Mahlwirkung von Vorteil. Als Mahlkörper dienen Kugeln aus Zirkonoxid, Zirkonmischoxid, Aluminiumoxid, Stahl oder Quarz vom Durchmesser 0,2 bis 20 mm. Besonders geeignet sind Rührwerkskugelmühlen. Für die erfindungsgemäße Herstellung der Chinacridonpigmente ist eine hohe Mahlwirkung erforderlich, die durch den Einsatz spezieller Ausführungsformen der Rührwerkskugelmühlen erreicht wird. Für eine Mahlung der gesuchten Effizienz sind z.B. Rührwerkskugelmühlen geeignet, die zum diskontinuierlichen und kontinuierlichen Arbeitsablauf ausgelegt sind, einen zylinderförmigen oder hohlzylinderförmigen Mahlraum in horizontaler oder vertikaler Bauweise aufweisen und die mit einer spezifischen Leistungsdichte von über 2,5 kW pro Liter Mahlraum betrieben werden können, wobei deren Rührwerksumfangsgeschwindigkeit über 12 m/s beträgt. Durch die bauliche Ausführung wird sichergestellt, daß die hohe Mahlenergie auf das Mahlgut übertragen wird. Dafür geeignete Mühlen sind z.B. in der DE-A-3 716 587 beschrieben. Ist die Mahlintensität der Mühle zu gering, so werden die guten, erfindungsgemäßen Eigenschaften, insbesondere die hohe Farbstärke und hervorragende Coloristik der Pigmente nicht erreicht. Die pro Zeiteinheit vom Rührwerk abgegebene Energie wird als Zerkleinerungsarbeit und als Reibungsenergie in Form von Wärme auf das Mahlgut übertragen. Zur problemlosen Abführung dieser großen Wärmemenge muß durch konstruktive Vorkehrungen das Verhältnis von Mahlraum zu Mahlraumoberfläche (Kühlfläche) möglichst klein gehalten werden. Bei hohen Durchsätzen wird im Kreislauf gemahlen und die Wärme wird überwiegend über das Mahlgut nach außen abgeführt.

Beim Einsatz von kontinuierlichen Rührwerkskugelmühlen zum Feinverteilen erfolgt die Abtrennung der Mahlkörper vom Mahlgut vorzugsweise durch Zentrifugalabscheidung, so daß die Trennvorrichtungen von den Mahlkörpern praktisch nicht berührt werden, wodurch man Verstopfungen derselben weitgehend verhindern kann. Die Rührwerkskugelmühlen werden hierbei mit hohem Mahlkörperfüllgrad betrieben. Bei den kontinuierlichen Rührwerkskugelmühlen wird der Mahlraum praktisch vollständig mit Mahlkörpern ausgefüllt.

Als Mahlkörper für diese Mühlen dienen beispielsweise Kugeln aus Zirkonoxid, Zirkonmischoxid, Aluminiumoxid, Stahl oder Quarz mit einem Durchmesser kleiner als 1 mm; zweckmäßig werden Mahlkörper mit einem Durchmesser von 0,2 bis 1 mm, vorzugsweise 0,3 bis 0,6 mm, verwendet.
Bei der Naßmahlung werden gegebenenfalls geringe Mengen organische Lösemittel und/oder anorganische Basen und/oder oberflächenaktive Mittel und/oder Pigmentdispergatoren zugesetzt. Zur Ermittlung der geeigneten Mahlbedingungen sind Vorversuche notwendig. Die Mahlung wird vorzugsweise im wäßrigen Medium und im alkalischen pH-Bereich durchgeführt. Sie kann auch im wäßrigen Medium unter Zusatz von geringen Mengen eines organischen Lösemittels, vorzugsweise bis zu 10 Gew.-%, bezogen auf das gesamte Mahlgut, in homogener Mischung durchgeführt werden. Es ist auch möglich die Mahlung in organischem Medium durchzuführen.

Die Pigmentkonzentration im Mahlgut ist abhängig von der Rheologie der Suspension und beträgt zweckmäßigerweise höchstens 30 Gew.-%, vorzugsweise 5 bis 30 Gew.-%, insbesondere 5 bis 20 Gew.-%, der Mahlgutsuspension.

Als anorganische Basen kommen Natronlauge, Kalilauge, Soda, Kaliumcarbonat, Calciumhydroxid und Ammoniak in Betracht. Auch Mischungen der genannten Basen können verwendet werden.

Als organische Lösemittel, die vorteilhaft der Mahlgutsuspension zugegeben werden, kommen in Frage: Mit Wasser mischbare C₁-C₈-Alkanole wie Methanol, Ethanol, n-Propanol, Isopropanol, n-Butanol, tert.-Butanol, Isobutanol, Pentanole, Hexanole oder Alkylhexanole; cyclische Alkanole wie Cyclohexanol; C₁-C₅-Dialkylketone wie Aceton, Diethylketon, Methylisobutylketon oder Methylethylketon, sowie Cyclohexanon; Ether und Glykolether wie Tetrahydrofuran, Dimethoxyethan, Methylglykol, Ethylglykol, Butylglykol, Ethyldiglykol, Methoxypropanol oder Methoxybutanol; aliphatische Säureamide wie Formamid oder Dimethylformamid; cyclische Carbonsäureamide wie N-Methylpyrrolidon, Valero- oder Caprolactam; heterocyclische Basen wie Pyridin, Morpholin oder Picolin, sowie Dimethylsulfoxid oder Mischungen dieser Lösungsmittel mit Wasser.

Für die Mahlung besonders bevorzugt sind Wasser und Lösungen von C₁-C₄-Alkanolen in Wasser, insbesondere eine Lösung von Isobutanol in Wasser.

Die Mahlung wird bei Temperaturen im Bereich von 0 bis 100 °C, zweckmäßig bei einer Temperatur zwischen 10 und 60 °C, vorzugsweise bei 20 bis 50 °C, durchgeführt.

Die Mahldauer ist abhängig von den Feinheitsanforderungen für das jeweilige Anwendungsgebiet, beispielsweise das Lack-, Druck- oder Kunststoffgebiet. Die Verweilzeit des Mahlguts in der Rührwerkskugelmühle liegt, je nach geforderter Feinheit, im allgemeinen zwischen 5 und 150 Minuten. Zweckmäßig erweist sich eine Dauer von 5 bis 45 Minuten, vorzugsweise 10 bis 30 Minuten. Während der Mahlung bleibt die Phase des eingesetzten Rohpigments erhalten. Nach der Mahlung liegen die Rohpigmente als feinteilige Präpigmente oder als Pigmente vor.
Die Teilchengröße der (Prä)Pigmentpartikel liegt unter 0,2 *µ*m.

e) Die als feinteilige Präpigmente vorliegenden Mahlgüter werden in wäßriger Suspension, gegebenenfalls nach Zugabe von anorganischen Basen und nach Beimischung von organischen Lösemitteln einer thermischen Behandlung (Lösemittelfinish) unterzogen.Als Lösemittel für einen Finish kommen alkalibeständige Lösemittel in Frage, wie beispielsweise: C₁-C₈-Alkanole und alicyclische Alkohole wie Methanol, Ethanol, n-Propanol oder Isopropanol, n-Butanol, Isobutanol oder tert.-Butanol, Pentanole, Hexanole, Cyclohexanol; Glykolether wie Monomethyl- oder Monoethylether des Ethylen- oder Propylenglykols, Butylglykol, Ethyldiglykol oder Methoxybutanol. Bevorzugte organische Lösemittel sind C₁-C₆-Alkanole, insbesondere Ethanol, Propanole, Butanole und Pentanole, besonders bevorzugt sind Butanole.

Die für die Durchführung des Lösemittelfinishs einzuhaltenden Bedingungen sind in hohem Maße von den angestrebten Eigenschaften der Pigmente abhängig und werden jeweils daraufhin ausgerichtet. Normalerweise wird die Suspension der Präpigmente, oder nach Zwischenisolierung der feuchte Präpigmentpreßkuchen, in dem inerten flüssigen Medium zur Überführung in die Pigmentform bei einer Temperatur im Bereich zwischen 50 und 200 °C, 1 bis 12 Stunden behandelt. Die zugefügte Lösemittelmenge kann innerhalb weiter Grenzen schwanken. Bevorzugt verwendet man die 1 bis 5 fache Gewichtsmenge Lösemittel, bezogen auf das Gewicht des Präpigments. Die thermische Behandlung im alkalischen, wäßrig-organischen Medium erfolgt bevorzugt bei 50 bis 150 °C für die Dauer von 1 bis 6 Stunden. Nach beendetem Finish können die verwendeten Lösemittel zurückgewonnen und erneut eingesetzt werden. Besonders wirtschaftlich ist es, für die Phasenumwandlung und für den Lösemittelfinish das gleiche Lösemittel einzusetzen.

Zur Erzielung bestimmter coloristischer Effekte kann vor oder nach der Phasenumwandlung c) eine Behandlung mit Peroxodisulfaten bei über 60 °C durchgeführt werden. Bezogen auf das Pigment werden hierbei zweckmäßigerweise 1 bis 20 Gew.-% eines Peroxodisulfats zugesetzt. Das Peroxodisulfat kann in fester Form oder als wäßrig-alkalische Lösung zugesetzt werden. Die durch die Oxidation mit Peroxodisulfat verbrauchte Alkalimenge, wird durch Alkalizusatz vor oder während der Oxidation kompensiert. Für diese Oxidation kommen Natrium-, Kalium- oder Ammoniumperoxodisulfat in Betracht.

Zur Verbesserung der coloristischen Eigenschaften können weiterhin oberflächenaktive Mittel und/oder Pigmentdispergatoren zugesetzt werden.
Die Zugabe der oberflächenaktiven Mittel und Pigmentdispergatoren kann auf einmal oder in mehreren Portionen erfolgen. Die Zugabe kann vor, während oder nach der Mahlung, während oder nach der Finishbehandlung oder während oder nach der Isolierung vorgenommen werden. Der am besten geeignete Zeitpunkt muß zuvor durch orientierende Versuche ermittelt werden.
Geeignete oberflächenaktive Mittel sind beispielsweise kationische, anionische oder nichtionische Tenside, vorzugsweise Fettsäuretauride, Fettsäuresarkoside, Fettalkoholpolyglykolether, Alkylphenolpolyglykolether, Alkansulfonsäuren sowie ihre Salze, Alkylphenylsulfonsäuren sowie ihre Salze und Alkylphenolpolyglykolethersulfate. Zusätzlich kommen rheologisch wirksame Additive, Pigmentdispergatoren auf Basis von Chinacridonpigmenten, Entschäumer und Extender in Betracht.

Geeignete Pigmentdispergatoren auf Basis von Chinacridonpigmenten sind Verbindungen mit der allgemeinen Formel (I),

P―[X] m (I)

in welcher
P für einen m-wertigen Rest eines linearen, unsubstituierten Chinacridons steht, worin
m eine Zahl von 1 bis 4 ist,
X eine Gruppe der Formel (II) 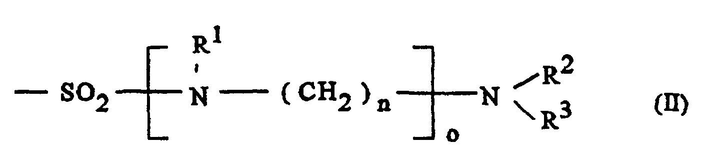 darstellt, worin R² und R³ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R² und R³ gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff oder Schwefel, R¹ ein Wasserstoffatom oder eine C₁-C₄-Alkylgruppe ist, n eine Zahl von 1 bis 6 und o die Zahl 0 oder 1 ist.

Durch Zusatz von Pigmentdispergatoren werden Pigmentzubereitungen erhalten. Dabei werden die Pigmentdispergatoren zweckmäßig in einer Menge von 1 bis 10 Gew.-%, bezogen auf das Pigment, zugesetzt.

Durch die Wahl der Mahlbedingungen, des organischen Lösemittels und der anorganischen Base, deren Konzentrationen, die Auswahl der Temperatur und die Dauer der Finishbehandlung lassen sich je nach dem gewünschten Verwendungszweck Chinacridonpigmente der β-Phase herstellen, die entweder eine höhere Transparenz oder eine höhere Deckkraft besitzen. Durch die Menge des Oxidationsmittels lassen sich die Farbtiefe und der Farbton einstellen. Gleichzeitig wird dabei die Farbstärke erhöht.

Die Herstellung von Chinacridonpigmenten der β-Phase nach dem erfindungsgemäßen Verfahren hat sich als besonders wirtschaftlich und umweltfreundlich erwiesen, weil bei der Phasenumwandlung nur geringe Mengen an Chemikalien und Lösemitteln eingesetzt werden, welche anschließend weiterverarbeitet, wieder vollständig regeneriert oder problemlos entsorgt werden können, so daß insgesamt keine Entsorgungsprobleme auftreten.

Es war überraschend, daß nur mit Polyphosphorsäuren oder Polyphosphorsäureestern, deren Phosphorpentoxidgehalt bei mindestens 84 Gew.-% liegt, reine Rohpigmente erhalten werden. Außerdem war nicht vorhersehbar, daß die vollständige Umwandlung der Rohpigmente der α-Phase in die β-Phase mit solch geringen Mengen Alkali in Gegenwart von Lösemitteln gelingt, da unter den in der DE-A-1 150 046 angegebenen Bedingungen die Phasenumwandlung selbst mit großen Mengen Alkali nicht gelingt. Wegen ihrer hohen Reinheit sind die erfindungsgemäß hergestellten Pigmente den gemäß der EP-A-0 655 485 hergestellten Pigmente in ihren coloristischen Eigenschaften und den Echtheiten deutlich überlegen.

Die nach der vorliegenden Erfindung erhältlichen Pigmente zeichnen sich aus durch ihre hervorragenden coloristischen und rheologischen Eigenschaften, insbesondere Flockungsstabilität, Dispergierbarkeit, Rheologie, Glanzverhalten, Farbstärke und eine überragende Wetter-, Lösemittel- und Überlackierechtheit. Die erfindungsgemäß hergestellten Pigmente lassen sich zum Pigmentieren von hochmolekularen organischen Materialien natürlicher oder synthetischer Herkunft einsetzen.

Hochmolekulare organische Materialien, die mit den genannten Pigmenten pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.
Dabei spielt es keine Rolle, ob die erwähnten hochmolekularen organischen Verbindungen als plastische Massen, Schmelzen oder in Form von Spinnlösungen, Lacken, Verschnitten, Anstrichstoffen oder Druckfarben vorliegen. Je nach Verwendungszweck erweist es sich als vorteilhaft, die erfindungsgemäß erhaltenen Pigmente als Verschnitt oder in Form von Präparationen oder Dispersionen zu benutzen. Bezogen auf das zu pigmentierende hochmolekulare organische Material setzt man die erfindungsgemäß hergestellten Pigmente und Pigmentzubereitungen zweckmäßigerweise in einer Menge von 0,1 bis 10 Gew.-% ein.

Besonders bevorzugte Lacksysteme sind die neuartigen wäßrigen Lacke sowie die lösemittelarmen High-Solid-Lacke mit hohem Festkörperanteil. Geeignet sind auch die herkömmlichen Lacksysteme aus der Klasse der Alkydmelaminharzlacke und Zweikomponentenlacke auf Basis von mit polyfunktionellen Isocyanaten vernetzbaren Alkyd- und Acrylharzen.
Die erfindungsgemäß hergestellten Pigmente sind in vielen Anwendungsmedien leicht und bis zu hohen Feinheiten dispergierbar. Solche Pigmentdispersionen besitzen eine hohe Flockungsstabilität und zeigen hervorragende rheologische Eigenschaften selbst bei hoher Pigmentierung. Mit ihnen lassen sich Lackierungen und Drucke von hoher Farbstärke, hohem Glanz und hoher Transparenz mit ausgezeichneten Echtheitseigenschaften erzielen.
Zur Beurteilung der Eigenschaften der nach der Erfindung hergestellten Pigmente auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes und ein wäßriger Lack auf Polyurethanbasis (PUR) ausgewählt.

Zur Beurteilung der Eigenschaften der nach der vorliegenden Erfindung hergestellten Pigmente auf dem Kunststoffgebiet wurde aus der Vielzahl der bekannten Kunststoffe Weichpolyvinylchlorid (PVC) ausgewählt.
Die Bestimmung der Farbstärke und des Farbtons erfolgte nach DIN 55986. Die Rheologie des Mahlguts nach der Dispergierung (Millbase-Rheologie) wurde anhand der folgenden fünfstufigen Skala bewertet:
5 dünnflüssig
4 flüssig
3 dickflüssig
2 leicht gestockt
1 gestockt

Nach dem Verdünnen des Mahlguts auf die Pigmentendkonzentration wurde die Viskosität mit dem Viskospatel nach Rossmann, Typ 301 der Firma Erichsen, Iserlohn, gemessen.

Glanzmessungen erfolgten an Folienaufgüssen unter einem Winkel von 20° nach DIN 67 530 (ASTMD 523) mit dem multigloss® -Glanzmeßgerät der Firma Byk-Mallinckrodt, Wesel.
Die Bestimmung der Lösemittelechtheit erfolgte nach DIN 55976.
Die Bestimmung der Ausblutechtheit erfolgte nach DIN 53775.
Die Bestimmung der Kristallphase der Rohpigmente, Präpigmente, Pigmente und Pigmentzubereitungen erfolgte durch Röntgenspektroskopie. Die Aufnahme der Röntgenspektren erfolgte mit Cu Kα-Strahlung. Unter Chinacridonpigmenten der α-Phase werden solche mit den Beugungswinkeln 6,12; 12,36; 13,94; 25,59 und 27,94 [2 Theta] verstanden. Unter Chinacridonpigmenten der β-Phase werden solche mit den Beugungswinkeln 5,65; 15,89 und 26,99 [2 Theta] verstanden. Abbildungen der entsprechenden Röntgenbeugungsdiagramme sind in EP-A-0 655 485 gezeigt.

In der vorliegenden Patentanmeldung beziehen sich Teile jeweils auf Gewichtsteile und Prozente jeweils auf Gewichtsprozente.

### Beispiel 1

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

704 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 116,5 Teile hochkristallines Rohpigment, das in der ß-Phase vorliegt.

### d) Mahlung:

In eine Rührwerkskugelmühle (Hersteller: Draiswerke GmbH, Mannheim), die mit 354 Teilen Zirkonmischoxidperlen vom Durchmesser 0,3-0,4 mm als Mahlkörper gefüllt ist, wird eine Suspension bestehend aus 77 Teilen Wasser und 6,4 Teilen grobkristallinem, unsubstituiertem Chinacridonrohpigment (ß-Phase) eindosiert und mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80 °C getrocknet.
Man erhält 6,1 Teile Pigment (β-Phase). 6,1 Teile Pigment werden mechanisch mit 0,61 Teilen Pigmentdispergator der Formel (I) gemischt. In dieser Formel (I) bedeutet R¹ ein Wasserstoffatom, R² und R³ je eine Ethylgruppe, n die Zahl 3,0, o die Zahl 1,0 und m die Zahl 2,0.
Man erhält eine Pigmentzubereitung, die im AM-Lack transparente und farbstarke Lackierungen liefert. Die Rheologie wird mit 5 bewertet. Die Viskosität beträgt 3,1 s und die Glanzmessung ergibt den Wert 78. Die Lösemittelechtheit ist einwandfrei.

### Beispiel 2

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

704 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 116,5 Teile hochkristallines Rohpigment, das in der β-Phase vorliegt.

### d) Mahlung:

In eine Rührwerkskugelmühle (Hersteller: Draiswerke GmbH, Mannheim), die mit 354 Teilen Zirkonmischoxidperlen vom Durchmesser 0,3-0,4 mm als Mahlkörper gefüllt ist, wird eine Suspension bestehend aus 77 Teilen Natronlauge (1 %ig) und 6,3 Teilen grobkristallinem, unsubstituiertem Chinacridonrohpigment (β-Phase) eindosiert und mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 6,1 Teile Pigment, das in der ß-Phase vorliegt. In PVC werden farbstarke und gut dispergierbare Ausfärbungen mit einwandfreier Ausblutechtheit erhalten.
Bestimmung des Reingehalts an Chinacridon: 10 Teile des wie vorstehend beschrieben hergestellten Pigments werden in 200 Teile konzentrierte Schwefelsäure bei <10 °C eingetragen und gelöst. Anschließend läßt man innerhalb 1 Stunde 56 Teile Wasser zutropfen. Danach wird 3 Stunden auf 80 °C geheizt. Man läßt auf 25 °C abkühlen und saugt den Niederschlag ab, wäscht diesen mit 75 %iger Schwefelsäure bis zum klaren Ablauf, wäscht anschließend neutral und trocknet bei 80 °C.
Man erhält 9,77 Teile reines Chinacridon. Das erhaltene Chinacridon ist damit 97,7 %ig.

### Beispiel 3

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 693 Teile eines 19,4 %igen Rohpigment-Preßkuchens, der überwiegend in der α-Phase vorliegt.

### c) Phasenumwandlung:

127,9 Teile des Rohpigment-Preßkuchens werden in ein Rührgefäß eingefüllt, 147 Teile Wasser, 2,6 Teile Natriumhydroxid (98 %ig) und 75 Teile Isobutanol (100 %ig) zugegeben und 1 Stunde auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 21,16 Teile hochkristallines Rohpigment, das in der β-Phase vorliegt.

### d) Mahlung:

In eine Rührwerkskugelmühle (Hersteller: Draiswerke GmbH, Mannheim), die mit 354 Teilen Zirkonmischoxidperlen vom Durchmesser 0,3-0,4 mm als Mahlkörper gefüllt ist, wird eine Suspension bestehend aus 77 Teilen Natronlauge (1 %ig), 6,3 Teilen grobkristallinem, unsubstituiertem Chinacridonrohpigment (β-Phase) und 0,32 Teilen Pigmentdispergator der Formel (I), eindosiert. In dieser Formel (I) bedeutet R¹ ein Wasserstoffatom, R² und R³ je eine Ethylgruppe, n die Zahl 3,0, o die Zahl 1,0 und m die Zahl 2,0. Dann wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 6,2 Teile Pigmentzubereitung (β-Phase), die im AM-Lack transparente und farbstarke Lackierungen liefert. Die Rheologie wird mit 5 bewertet. Die Viskosität beträgt 3,2 s und die Glanzmessung ergibt den Wert 84.

### Beispiel 4

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 693 Teile eines 19,4 %igen Rohpigment-Preßkuchens, der überwiegend in der α-Phase vorliegt.

### c) Phasenumwandlung:

127,9 Teile des Rohpigment-Preßkuchens werden in ein Rührgefäß eingefüllt, 147 Teile Wasser, 2,6 Teile Natriumhydroxid (98 %ig) und 75 Teile Isobutanol (100 %ig) zugegeben und 5 Stunden auf 130 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 22,9 Teile hochkristallines Rohpigment, das in der β-Phase vorliegt.

### d) Mahlung:

In eine Rührwerkskugelmühle (Hersteller: Draiswerke GmbH, Mannheim), die mit 354 Teilen Zirkonmischoxidperlen vom Durchmesser 0,3-0,4 mm als Mahlkörper gefüllt ist, wird eine Suspension bestehend aus 77 Teilen Natronlauge (1 %ig), 6,3 Teilen grobkristallinem, unsubstituiertem Chinacridonrohpigment (β-Phase) und 0,32 Teilen Pigmentdispergator der Formel (I) eindosiert. In dieser Formel (I) bedeutet R¹ ein Wasserstoffatom, R² und R³ je eine Ethylgruppe, n die Zahl 3,0, o die Zahl 1,0 und m die Zahl 2,0. Dann wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 6,2 Teile Pigmentzubereitung (β-Phase), die im AM-Lack transparente und farbstarke Lackierungen liefert. Die Rheologie wird mit 5 bewertet. Die Viskosität beträgt 3,4 s und die Glanzmessung ergibt den Wert 84.

### Beispiel 5

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

138 Teile des Rohpigment-Preßkuchens werden in ein Rührgefäß eingefüllt, 137 Teile Wasser, 2,6 Teile Natriumhydroxid (98 %ig) und 12,3 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 24,4 Teile hochkristallines Rohpigment, das in der β-Phase vorliegt.

### d) Mahlung:

In eine Rührwerkskugelmühle (Hersteller: Draiswerke GmbH, Mannheim), die mit 354 Teilen Zirkonmischoxidperlen vom Durchmesser 0,3-0,4 mm als Mahlkörper gefüllt ist, wird eine Suspension bestehend aus 77 Teilen Natronlauge (1 %ig), 6,3 Teilen grobkristallinem, unsubstituiertem Chinacridonrohpigment (β-Phase) und 0,32 Teilen Pigmentdispergator der Formel (I) eindosiert. In dieser Formel (I) bedeutet R¹ ein Wasserstoffatom, R² und R³ je eine Ethylgruppe, n die Zahl 3,0, o die Zahl 1,0 und m die Zahl 2,0. Dann wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 6,2 Teile Pigmentzubereitung (β-Phase), die im AM-Lack transparente und farbstarke Lackierungen liefert. Die Rheologie wird mit 5 bewertet. Die Viskosität beträgt 3,4 s und die Glanzmessung ergibt den Wert 84.

### Beispiel 6

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 2270 Teilen Phosphorsäure (13,9 %ig) mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 815,6 Teile eines 16,15 %igen Rohpigment-Preßkuchens, der überwiegend in der α-Phase vorliegt.

### c) Phasenumwandlung:

185,8 Teile des Rohpigment-Preßkuchens werden in ein Rührgefäß eingefüllt, 144,2 Teile Wasser, 0,3 Teile Natriumhydroxid (98 %ig) und 90 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 24,14 Teile hochkristallines Rohpigment, das in der β-Phase vorliegt.

### d) Mahlung:

In eine Rührwerkskugelmühle (Hersteller: Draiswerke GmbH, Mannheim), die mit 354 Teilen Zirkonmischoxidperlen vom Durchmesser 0,3-0,4 mm als Mahlkörper gefüllt ist, wird eine Suspension bestehend aus 77 Teilen Natronlauge (1 %ig), 6,3 Teilen grobkristallinem, unsubstituiertem Chinacridonrohpigment (β-Phase) und 0,32 Teilen Pigmentdispergator der Formel (I) eindosiert. In dieser Formel (I) bedeutet R¹ ein Wasserstoffatom, R² und R³ je eine Ethylgruppe, n die Zahl 3,0, o die Zahl 1,0 und m die Zahl 2,0. Dann wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 6,1 Teile Pigmentzubereitung (β-Phase), die im AM-Lack transparente und farbstarke Lackierungen liefert. Die Rheologie wird mit 5 bewertet. Die Viskosität beträgt 3,2 s und die Glanzmessung ergibt den Wert 79.

### Beispiel 7

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 760 Teile eines 17,4 %igen Rohpigment-Preßkuchens, der überwiegend in der α-Phase vorliegt.

### c) Phasenumwandlung:

718 Teile des Rohpigment-Preßkuchens werden in ein Rührgefäß eingefüllt. Danach werden 656 Teile Wasser und 32,7 Teile Natriumhydroxid (98 %ig) zugegeben. Es wird auf 90 °C erhitzt und bei dieser Temperatur eine Lösung aus 31,2 Teilen Wasser, 1,45 Teilen Natriumhydroxid (98 %ig) und 8,33 Teilen Natriumperoxodisulfat zugesetzt. Es wird 1 Stunde bei 90 °C gerührt. Danach werden 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 120,75 Teile hochkristallines Rohpigment, das in der β-Phase vorliegt.

### d) Mahlung:

In eine Rührwerkskugelmühle (Hersteller: Draiswerke GmbH, Mannheim), die mit 354 Teilen Zirkonmischoxidperlen vom Durchmesser 0,3-0,4 mm als Mahlkörper gefüllt ist, wird eine Suspension bestehend aus 80 Teilen Natronlauge (1 %ig) und 6,3 Teilen grobkristallinem, unsubstituiertem Chinacridonrohpigment (β-Phase) eindosiert. Dann wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 5,6 Teile Pigment (β-Phase). 5,6 Teile Pigment werden mechanisch mit 0,28 Teilen Pigmentdispergator der Formel (I) gemischt. In dieser Formel (I) bedeutet R¹ ein Wasserstoffatom, R² und R³ je eine Ethylgruppe, n die Zahl 3,0, o die Zahl 1,0 und m die Zahl 2,0.
Man erhält eine Pigmentzubereitung (β-Phase), die im AM-Lack transparente und farbstarke Lackierungen liefert. Die Lackierungen sind etwas tiefer im Purton als die mit dem nach Beispiel 1 hergestellten Pigment.

### Beispiel 8

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

704 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 116,5 Teile hochkristallines Rohpigment, das in der β-Phase vorliegt.

### d) Mahlung:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines Rohpigment (β-Phase) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt. Man erhält 23,2 Teile Mahlgut.

### e) Finish:

Zur Finishoperation werden 22 Teile des obigen Mahlguts in 220 Teile Isobutanol (85 %ig) eingetragen und 1,1 Teile Pigmentdispergator der Formel (I) zugegeben. In dieser Formel (I) bedeutet R¹ ein Wasserstoffatom, R² und R³ je eine Ethylgruppe, n die Zahl 3,0, o die Zahl 1,0 und m die Zahl 2,0. Es wird auf Siedetemperatur erhitzt und 5 Stunden bei Siedetemperatur gerührt. Danach wird unter gleichzeitiger Zugabe von Wasser das Isobutanol durch Erhitzen bis auf 100 °C am Übergang azeotrop abdestilliert. Nach dem Abkühlen auf 60 °C wird die Pigmentzubereitung abgesaugt, mit Wasser gewaschen und bei 80 °C getrocknet.
Man erhält 22,8 Teile Pigmentzubereitung (β-Phase), die im AM-Lack deckende Lackierungen liefert.

### Beispiel 9

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

704 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 116,5 Teile hochkristallines Rohpigment, das in der β-Phase vorliegt.

### d) Mahlung:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 76 Teilen Natronlauge (1 %ig), 19 Teilen Isopropanol und 6 Teilen grobkristallinem, unsubstituiertem Chinacridonrohpigment (β-Phase) eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 6,0 Teile Pigment (β-Phase), die nun mechanisch mit 0,15 Teilen Pigmentdispergator der Formel (I) gemischt werden. In dieser Formel (I) bedeutet R¹ ein Wasserstoffatom, R² und R³ je eine Ethylgruppe, n die Zahl 3,0, o die Zahl 1,0 und m die Zahl 2,0.
Man erhält eine Pigmentzubereitung, die im AM-Lack transparente und farbstarke Lackierungen liefert. Die Rheologie wird mit 5 bewertet. Die Viskosität beträgt 3,1 s und die Glanzmessung ergibt den Wert 86.

### Beispiel 10

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

704 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 116,5 Teile hochkristallines Rohpigment, das in der β-Phase vorliegt.

### d) Mahlung:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 79 Teilen Natronlauge (0,3 %ig), 6 Teilen grobkristallinem, unsubstituiertem Chinacridonrohpigment (β-Phase) und 0,24 Teile des Natriumsalzes eines Alkylphenolpolyglykolethersulfats eindosiert. Es wird mit einer Rührwerksumfangsgeschwindigkeit von 15,6 m/s sowie einer spezifischen Leistungsdichte von 3,1 kW pro Liter Mahlraum 10 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen mit Salzsäure (10 %ig) angesäuert, abgesaugt, mit Wasser neutral gewaschen und bei 80 °C getrocknet.

Man erhält 5,8 Teile Pigment (β-Phase), die nun mechanisch mit 0,15 Teilen Pigmentdispergator der Formel (I) gemischt werden. In dieser Formel (I) bedeutet R¹ ein Wasserstoffatom, R² und R³ je eine Ethylgruppe, n die Zahl 3,0, o die Zahl 1,0 und m die Zahl 2,0.
Man erhält eine Pigmentzubereitung, die im AM-Lack transparente und farbstarke Lackierungen liefert. Die Rheologie wird mit 5 bewertet. Die Viskosität beträgt 3,1 s und die Glanzmessung ergibt den Wert 81.

### Beispiel 11

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

704 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 116,5 Teile hochkristallines Rohpigment, das in der β-Phase vorliegt.

### d) Mahlung:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 79 Teilen Natronlauge (1 %ig) und 6,0 Teilen grobkristallinem, unsubstituiertem Chinacridonrohpigment (β-Phase) eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 5,9 Teile Pigment (β-Phase), die nun mechanisch mit 0,3 Teilen Pigmentdispergator der Formel (I) gemischt werden. In dieser Formel (I) bedeutet R¹ ein Wasserstoffatom, R² und R³ je eine Ethylgruppe, n die Zahl 3,0, o die Zahl 1,0 und m die Zahl 2,0.
Man erhält eine Pigmentzubereitung, die im AM-Lack transparente und farbstarke Lackierungen liefert. Die Rheologie wird mit 5 bewertet. Die Viskosität beträgt 3,6 s und die Glanzmessung ergibt den Wert 84. Die Wetterechtheit, die Flockungsstabilität und die Dispergierbarkeit sind sehr gut. Die Überlackierechtheit ist einwandfrei.

### Beispiel 12

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

704 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 116,5 Teile hochkristallines Rohpigment, das in der β-Phase vorliegt.

### d) Mahlung:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension bestehend aus 73 Teilen Natronlauge (1 %ig), 4 Teilen Isobutanol (100 %ig), 6,3 Teilen grobkristallinem, unsubstituiertem Chinacridonrohpigment (β-Phase) und 0,32 Teilen Pigmentdispergator der Formel (I) eindosiert. In dieser Formel (I) bedeutet R¹ ein Wasserstoffatom, R² und R³ je eine Ethylgruppe, n die Zahl 3,0, o die Zahl 1,0 und m die Zahl 2,0. Dann wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 6,0 Teile Pigmentzubereitung (β-Phase), die im AM-Lack transparente und farbstarke Lackierungen liefert. Die Rheologie wird mit 5 bewertet. Die Viskosität beträgt 3,0 s und die Glanzmessung ergibt den Wert 82.

### Beispiel 13

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

704 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 116,5 Teile hochkristallines Rohpigment, das in der β-Phase vorliegt.

### d) Mahlung:

In einen Stahlbehälter, der mit 3200 Teilen Stahlkugeln vom Durchmesser 10 mm als Mahlkörper zu 55 Vol.-% gefüllt ist, wird eine Suspension bestehend aus 119,7 Teilen Natronlauge (1 %ig), 9,8 Teilen grobkristallinem, unsubstituiertem Chinacridonrohpigment (β-Phase) und 0,5 Teilen Pigmentdispergator der Formel (I) eingefüllt. In dieser Formel (I) bedeutet R¹ ein Wasserstoffatom, R² und R³ je eine Ethylgruppe, n die Zahl 3,0, o die Zahl 1,0 und m die Zahl 2,0. Es wird 24 Stunden lang bei 75 % der kritischen Drehzahl auf einem Rolltisch gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 9,7 Teile Pigmentzubereitung (β-Phase), die im AM-Lack deckende Lackierungen liefert.

### Beispiel 14

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

704 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 116,5 Teile hochkristallines Rohpigment, das in der β-Phase vorliegt.

### d) Mahlung:

In einem Porzellanbehälter, der mit 1200 Teilen Quarzitperlen vom Durchmesser 2-3 mm als Mahlkörper zu 90 Vol.-% gefüllt ist, wird eine Suspension bestehend aus 200 Volumenteilen Isobutanol (85 %ig), 10,0 Teilen grobkristallinem, unsubstituiertem Chinacridonrohpigment (β-Phase) und 0,5 Teilen Pigmentdispergator der Formel (I) eindosiert. In dieser Formel (I) bedeutet R¹ ein Wasserstoffatom, R² und R³ je eine Ethylgruppe, n die Zahl 3,0, o die Zahl 1,0 und m die Zahl 2,0. Es wird 12 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt. Die Mahlkörper werden mit Wasser abgespült und aus den vereinigten Mahlgutsuspensionen unter gleichzeitiger Zugabe von Wasser das Isobutanol durch Erhitzen bis auf 100 °C am Übergang azeotrop abdestilliert. Nach dem Abkühlen auf 60 °C wird die Pigmentzubereitung abgesaugt, mit Wasser gewaschen und bei 80 °C getrocknet.
Man erhält 8,4 Teile Pigmentzubereitung (β-Phase), die im AM-Lack deckende und farbstarke Lackierungen liefert.

### Beispiel 15

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

704 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 116,5 Teile hochkristallines Rohpigment, das in der β-Phase vorliegt.

### d) Mahlung:

In eine Rührwerkskugelmühle (Hersteller: Draiswerke GmbH, Mannheim), die mit 360 Teilen Zirkonmischoxidperlen vom Durchmesser 0,3-0,4 mm als Mahlkörper gefüllt ist, wird eine Suspension bestehend aus 77 Teilen Natronlauge (1 %ig), 6,4 Teilen grobkristallinem, unsubstituiertem Chinacridonrohpigment (β-Phase) und 0,64 Teilen Pigmentdispergator der Formel (I) eindosiert. In dieser Formel (I) bedeutet R¹ ein Wasserstoffatom, R² und R³ je eine Ethylgruppe, n die Zahl 3,0, o die Zahl 1,0 und m die Zahl 2,0. Dann wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült, die vereinigten Mahlgutsuspensionen abgesaugt und mit Wasser neutral gewaschen.
Man erhält 34,0 Teile eines 39,7 %igen Präpigment-Preßkuchens.

### e) Finish:

Zur Finishoperation werden 34,0 Teile des obigen Präpigment-Preßkuchens in eine Mischung aus 75,5 Teilen Natronlauge (1,75 %ig) und 40,5 Teilen n-Butanol (100 %ig) eingetragen. Es wird auf Siedetemperatur erhitzt und 3 Stunden bei Siedetemperatur gerührt. Danach wird das n-Butanol durch Erhitzen bis auf 100 °C am Übergang azeotrop abdestilliert. Nach dem Abkühlen auf 60 °C wird die Pigmentzubereitung abgesaugt, mit Wasser gewaschen und bei 80 °C getrocknet. Man erhält 13,5 Teile Pigmentzubereitung (β-Phase), die im AM-Lack transparente und farbstarke Lackierungen liefert.

### Beispiel 16

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 724 Teile eines 18,15 %igen Rohpigment-Preßkuchens, der überwiegend in der α-Phase vorliegt.

### c) Phasenumwandlung:

686 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert.
Man erhält 1456 Teile einer 8,3 %igen Rohpigment-Suspension.

### d) Mahlung:

In eine Rührwerkskugelmühle (Hersteller: Draiswerke GmbH, Mannheim), die mit 354 Teilen Zirkonmischoxidperlen vom Durchmesser 0,3-0,4 mm als Mahlkörper gefüllt ist, werden 83,5 Teile der obigen Rohpigment-Suspension und 0,35 Teile Pigmentdispergator der Formel (I) eindosiert. In dieser Formel (I) bedeutet R¹ ein Wasserstoffatom, R² und R³ je eine Ethylgruppe, n die Zahl 3,0, o die Zahl 1,0 und m die Zahl 2,0. Dann wird mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 6,5 Teile Pigmentzubereitung (β-Phase), die im AM-Lack transparente und farbstarke Lackierungen liefert. Die Rheologie wird mit 5 bewertet. Die Viskosität beträgt 3,4 s und die Glanzmessung ergibt den Wert 89.

### Beispiel 17

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

704 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 116,5 Teile hochkristallines Rohpigment, das in der β-Phase vorliegt.

### d) Mahlung:

In eine Rührwerkskugelmühle (Hersteller: Draiswerke GmbH, Mannheim), die mit 354 Teilen Zirkonmischoxidperlen vom Durchmesser 0,3-0,4 mm als Mahlkörper gefüllt ist, wird eine Suspension bestehend aus 77 Teilen Natronlauge (1 %ig), 6,3 Teilen grobkristallinem, unsubstituiertem Chinacridonrohpigment (β-Phase) und 0,32 Teilen Pigmentdispergator der Formel (I) eindosiert. In dieser Formel (I) bedeutet R¹ ein Wasserstoffatom, R² und R³ je eine Ethylgruppe, n die Zahl 3,0, o die Zahl 1,0 und m die Zahl 2,0. Dann wird mit einer Rührwerksumfangsgeschwindigkeit von 15,6 m/s sowie einer spezifischen Leistungsdichte von 3,1 kW pro Liter Mahlraum 7,5 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 6,2 Teile Pigmentzubereitung (β-Phase), die im AM-Lack deckende und farbstarke Lackierungen liefert. Die Rheologie wird mit 5 bewertet. Die Viskosität beträgt 3,1 s und die Glanzmessung ergibt den Wert 82.

### Beispiel 18

### a und b) Ringschluß und Hydrolyse:

150 Teile 2,5-Dianilinoterephthalsäure werden unter Rühren bei 80 bis 90 °C in 750 Teile Polyphosphorsäure, die 84-85 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Wasser mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 754 Teile eines 17,75 %igen Rohpigment-Preßkuchens, der überwiegend in der α-Phase vorliegt.

### c) Phasenumwandlung:

704 Teile des Rohpigment-Preßkuchens werden in ein Rührgefäß eingefüllt, 670 Teile Wasser, 12,9 Teile Natriumhydroxid (98 %ig) und 375 Teile Isobutanol (100 %ig) zugegeben und 5 Stunden auf 150 °C unter dem sich im geschlossenen Gefäß einstellenden Druck erhitzt. Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 116,5 Teile hochkristallines Rohpigment, das in der β-Phase vorliegt.

### d) Mahlung:

In eine Rührwerkskugelmühle (Hersteller: Draiswerke GmbH, Mannheim), die mit 354 Teilen Zirkonmischoxidperlen vom Durchmesser 0,3-0,4 mm als Mahlkörper gefüllt ist, wird eine Suspension, bestehend aus 77 Teilen Natronlauge (1 %ig) und 6,3 Teilen grobkristallinem, unsubstituiertem Chinacridonrohpigment (β-Phase), eindosiert und mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral gewaschen und bei 80 °C getrocknet.
Man erhält 18,3 Teile eines 32,4 %igen Präpigment-Preßkuchens.

### e) Finish:

Zur Finishoperation werden 18,3 Teile des obigen Präpigment-Preßkuchens in eine Mischung aus 48,3 Teilen Natronlauge (1,25 %ig) und 3 Teilen Isobutanol (100 %ig) eingetragen. Es wird auf Siedetemperatur erhitzt und 2 Stunden bei Siedetemperatur gerührt. Danach wird das Isobutanol durch Erhitzen bis auf 100 °C am Übergang azeotrop abdestilliert. Nach dem Abkühlen auf 60 °C wird die Pigmentzubereitung abgesaugt, mit Wasser gewaschen und bei 80 °C getrocknet.
Man erhält 5,9 Teile Pigment (β-Phase). In PVC werden farbstarke und gut dispergierbare Ausfärbungen mit einwandfreier Ausblutechtheit erhalten. Im PUR-Lack werden sehr farbstarke Lackierungen mit gutem Glanz erhalten.

## Patentansprüche

1. Verfahren zur Herstellung von linearen, unsubstituierten Chinacridonpigmenten oder -pigmentzubereitungen der β-Phase, **dadurch gekennzeichnet, daß** man
a) 2,5-Dianilinoterephthalsäure in Polyphosphorsäure oder Polyphosphorsäureester, deren Phosphorpentoxidgehalt bei mindestens 84 Gew.-% liegt, zum Chinacridon cyclisiert,
b) anschließend mit Wasser oder einer wäßrigen Mineralsäurelösung bei einer Temperatur von mindestens 40 °C zum Chinacridonrohpigment, das überwiegend in der α-Phase vorliegt, hydrolysiert,
c) dann das Chinacridonrohpigment der α-Phase, zur Phasenumwandlung in grobkristallines Rohpigment der β-Phase, in Gegenwart einer 0,1 bis 3 gew.- %igen anorganischen Base in Wasser und alkalibeständigen organischen Lösemitteln auf eine Temperatur zwischen 120 und 200 °C erhitzt und
d) das grobkristalline Chinacridonrohpigment der β-Phase zur Feinverteilung in ein Pigment oder Präpigment einer Trocken- oder Naßmahlung unterwirft; und anschließend das erhaltene feinteilige Pigment der β-Phase isoliert;
e) oder das in d) erhaltene feinteilige Präpigment der β-Phase einer Finishbehandlung in Gegenwart von Lösemitteln unterwirft und anschließend das Pigment isoliert.

2. Verfahren nach Anspruch 1, **dadurch gekennzeichnet, daß** der Phosphorpentoxidgehalt in der Polyphosphorsäure oder im Polyphosphorsäureester 84 bis 85 Gew.-% beträgt.

3. Verfahren gemäß Anspruch 1 oder 2, **dadurch gekennzeichnet, daß** man, bezogen auf das Gewicht des Rohpigments, bei der Phasenumwandlung die 0,01- bis 0,5-fache Menge der anorganischen Base verwendet.

4. Verfahren nach mindestens einem der Ansprüche 1 bis 3, **dadurch gekennzeichnet, daß** die Konzentration der anorganischen Base in Wasser bei der Phasenumwandlung zwischen 0,2 und 2 Gew.-% liegt.

5. Verfahren nach mindestens einem der Ansprüche 1 bis 4, **dadurch gekennzeichnet, daß** man, bezogen auf das Gewicht des Rohpigments, die Phasenumwandlung in Gegenwart der 0,5- bis 10-fachen Menge eines alkalibeständigen organischen Lösemittels durchführt.

6. Verfahren nach mindestens einem der Ansprüche 1 bis 5, **dadurch gekennzeichnet, daß** man als alkalibeständige organische Lösemittel Alkanole, insbesondere Isopropanol oder Isobutanol, einsetzt.

7. Verfahren nach mindestens einem der Ansprüche 1 bis 6, **dadurch gekennzeichnet, daß** man die Phasenumwandlung bei Temperaturen von 130 bis 160 °C durchführt.

8. Verfahren nach mindestens einem der Ansprüche 1 bis 7, **dadurch gekennzeichnet, daß** man vor oder nach der Phasenumwandlung Peroxodisulfaten zusetzt.

9. Verfahren nach mindestens einem der Ansprüche 1 bis 8, **dadurch gekennzeichnet, daß** man die Naßmahlung in einer Rührwerkskugelmühle mit einer Leistungsdichte von über 2,5 kW pro Liter Mahlraum und einer Umfangsgeschwindigkeit von über 12 m/s durchführt.

10. Verfahren nach mindestens einem der Ansprüche 1 bis 9, **dadurch gekennzeichnet, daß** man den Lösemittelfinish bei 50 bis 200 °C in n-Butanol oder Isobutanol durchführt.

11. Verfahren gemäß einem oder mehreren der Ansprüche 1 bis 10, **dadurch gekennzeichnet, daß** man zu einem beliebigen Zeitpunkt im Verlauf des Verfahrens einen oder mehrere Pigmentdispergatoren der allgemeinen Formel (I) zugibt,
P―Xm (I)
in welcher
P für einen m-wertigen Rest eines linearen unsubstituierten Chinacridons steht, worin
m eine Zahl von 1 bis 4 ist,
X eine Gruppe der Formel (II) 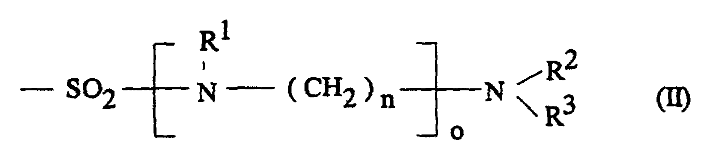 darstellt, worin R² und R³ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R² und R³ gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff oder Schwefel, R¹ ein Wasserstoffatom oder eine C₁-C₄-Alkylgruppe ist, n eine Zahl von 1 bis 6 und o die Zahl 0 oder 1 ist.

## Claims

1. A process for preparing linear unsubstituted ß-phase quinacridone pigments or pigment preparations, which comprises
a) cyclizing 2,5-dianilinoterephthalic acid in polyphosphoric acid or polyphosphoric ester with a phosphorus pentoxide content of at least 84% by weight to form the quinacridone,
b) subsequently hydrolyzing this quinacridone with water or with an aqueous mineral acid solution at a temperature of at least 40°C to form the crude quinacridone pigment which is predominantly in the α-phase,
c) then heating the crude α-phase quinacridone pigment to a temperature between 120 and 200°C in the presence of a from 0.1 to 3% strength by weight inorganic base in water and alkali-stable organic solvents, for the change of phase into coarsely crystalline crude β-phase pigment, and
d) subjecting the coarsely crystalline crude β-phase quinacridone pigment, for the fine division to form a pigment or prepigment, to dry or wet milling; and then isolating the resulting finely divided β-phase pigment;
e) or subjecting the finely divided β-phase prepigment obtained in d) to a finish treatment in the presence of solvents, and then isolating the pigment.

2. The process as claimed in claim 1, wherein the phosphorus pentoxide content in the polyphosphoric acid or in the polyphosphoric ester is from 84 to 85% by weight.

3. The process as claimed in claim 1 or 2, wherein the change of phase is carried out using, based on the weight of the crude pigment, from 0.01 to 0.5 times the amount of the inorganic base.

4. The process as claimed in at least one of claims 1 to 3, wherein the concentration of the inorganic base in water in the course of the change of phase is between 0.2 and 2% by weight.

5. The process as claimed in at least one of claims 1 to 4, wherein the change of phase is carried out in the presence, based on the weight of the crude pigment, of from 0.5 to 10 times the amount of an alkali-stable organic solvent.

6. The process as claimed in at least one of claims 1 to 5, wherein alkali-stable organic solvents used are alkanols, especially isopropanol or isobutanol.

7. The process as claimed in at least one of claims 1 to 6, wherein the change of phase is carried out at temperatures of from 130 to 160°C.

8. The process as claimed in at least one of claims 1 to 7, wherein peroxodisulfates are added prior or subsequent to the change of phase.

9. The process as claimed in at least one of claims 1 to 8, wherein wet milling is carried out in a ballmill at a power density of more than 2.5 kW per liter of milling space and with a peripheral speed of more than 12 m/s.

10. The process as claimed in at least one of claims 1 to 9, wherein the solvent finish is carried out in n-butanol or isobutanol at from 50 to 200°C.

11. The process as claimed in one or more of claims 1 to 10, wherein at any desired point in time in the course of the process one or more pigment dispersants of the formula (I) are added,
P ― Xm (I)
where
P is an m-valent radical of a linear unsubstituted quinacridone, in which
m is a number from 1 to 4,
X is a group of the formula (II) 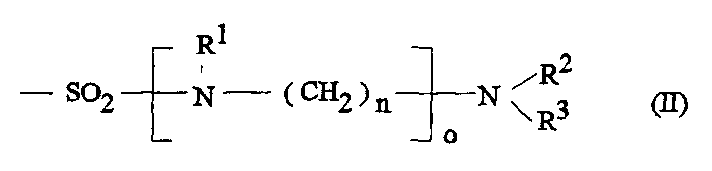 in which R² and R³ independently of one another are each a hydrogen atom, a C₁-C₂₀-alkyl or C₂-C₂₀-alkenyl group or a C₅-C₇-cycloalkyl group, or in which R² and R³, together with the adjacent nitrogen atom, form an aliphatic or aromatic, five- or six-membered heterocyclic ring having in each case 1 to 3 ring members comprising identical or different heteroatoms from the series consisting of nitrogen, oxygen and sulfur, R¹ is a hydrogen atom or a C₁-C₄-alkyl group, n is a number from 1 to 6, and o is 0 or 1.

## Revendications

1. Procédé pour la préparation de pigments de quinacridone ou de préparations de pigments de phase β linéaires, non substitués, **caractérisé en ce que**
a) on réalise la cyclisation de l'acide 2,5-dianilinotéréphtalique dans l'acide polyphosphorique ou l'ester d'acide polyphosphorique, dont la teneur en pentoxyde de phosphore se situe à au moins 84 % en poids, pour obtenir la quinacridone ;
b) on hydrolyse ensuite avec de l'eau ou une solution aqueuse d'acide minéral à une température d'au moins 40 °C pour obtenir un pigment brut de quinacridone, qui se présente de manière prépondérante sous la phase α ;
c) on chauffe ensuite le pigment de quinacridone de la phase α, pour la transformation de phase en pigment brut à gros cristaux de phase β, en présence d'une base inorganique dans l'eau à entre 0,1 et 3 % en poids et de solvants organiques résistant aux alcalis à une température comprise entre 120 et 200 °C ; et
d) on réalise un broyage à sec ou humide du pigment brut de quinacridone à gros cristaux en phase β pour obtenir une fine dispersion d'un pigment ou d'un prépigment ; et on isole ensuite le pigment finement dispersé obtenu sous forme de phase β ;
e) ou on réalise un traitement de finish en présence de solvants sur le prépigment en phase β finement dispersé obtenu en d) et on isole ensuite le pigment.

2. Procédé selon la revendication 1, **caractérisé en ce que** la concentration de pentoxyde de phosphore dans l'acide polyphosphorique ou dans l'ester d'acide polyphosphorique s'élève à entre 84 et 85 % en poids.

3. Procédé selon la revendication 1 ou 2, **caractérisé en ce que** l'on utilise, par rapport au poids du pigment brut, dans la transformation de phase la quantité d'un facteur 0,01 à 0,5 fois de la base inorganique.

4. Procédé selon au moins l'une des revendications 1 à 3, **caractérisé en ce que** la concentration de la base inorganique dans l'eau se situe lors de la transformation de phase à entre 0,2 et 2 % en poids.

5. Procédé selon au moins l'une des revendications 1 à 4, **caractérisé en ce que** l'on réalise, par rapport au poids du pigment brut, la transformation de phase en présence de la quantité multipliée par un facteur 0,5 à 10 d'un solvant organique résistant aux alcalis.

6. Procédé selon au moins l'une des revendications 1 à 5, **caractérisé en ce que** l'on utilise comme solvants organiques résistant aux alcalis les alcanols, en particulier l'isopropanol ou l'isobutanol.

7. Procédé selon au moins l'une des revendications 1 à 6, **caractérisé en ce que** l'on réalise la transformation de phase à des températures de 130 à 160 °C.

8. Procédé selon au moins l'une des revendications 1 à 7, **caractérisé en ce que** l'on ajoute avant ou après la transformation de phase des peroxodisulfates.

9. Procédé selon au moins l'une des revendications 1 à 8, **caractérisé en ce que** l'on réalise le broyage humide dans un broyeur à billes avec une puissance supérieure à 2,5 kW par litre d'espace de broyage et une vitesse périphérique supérieure à 12 m/s.

10. Procédé selon au moins l'une des revendications 1 à 9, **caractérisé en ce que** l'on réalise le finish au solvant à entre 50 et 200 °C dans le n-butanol ou l'isobutanol.

11. Procédé selon l'une ou plusieurs des revendications 1 à 10, **caractérisé en ce que** l'on ajoute à un instant quelconque dans le déroulement du procédé un ou plusieurs agents dispersants des pigments de formule générale (I)
P―Xm (I)
dans laquelle
P représente un groupe de valence m d'une quinacridone linéaire non substituée, dans laquelle
m est un nombre compris entre 1 et 4,
X représente un groupe de formule (II) 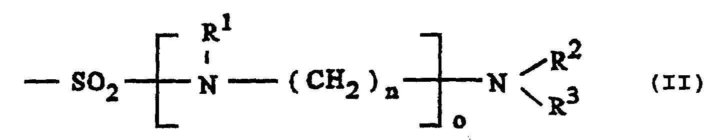 dans laquelle R² et R³ représentent indépendamment l'un de l'autre respectivement un atome d'hydrogène, un groupe alkyle en C₁ à C₂₀, alcényle en C₁ à C₂₀ ou un groupe cycloalkyle en C₅ à C₇, ou dans laquelle R² et R³ forment ensemble avec l'atome d'azote adjacent un système hétérocyclique à 5 ou 6 chaînons, aliphatique ou aromatique, ayant respectivement de 1 à 3 hétéro-atomes identiques ou différents appartenant au cycle choisis parmi l'azote, l'oxygène ou le soufre, R¹ représente un atome d'hydrogène ou un groupe alkyle en C₁ à C₄, n est un nombre compris entre 1 et 6 et o est un nombre compris entre 0 et 1.
